Europäisches Patentamt

European Patent Office

Office européen des brevets

(11) Numéro de publication: **0 362 041 B1**

(12) **FASCICULE DE BREVET EUROPEEN**

(45) Date de publication de fascicule du brevet: **20.10.93** (51) Int. Cl.⁵: **H01S 3/223**

(21) Numéro de dépôt: **89402615.2**

(22) Date de dépôt: **25.09.89**

(54) **Gaz lasants et procédé de travail au laser C02.**

(30) Priorité: **26.09.88 FR 8812527**

(43) Date de publication de la demande:
**04.04.90 Bulletin 90/14**

(45) Mention de la délivrance du brevet:
**20.10.93 Bulletin 93/42**

(84) Etats contractants désignés:
**AT BE CH DE ES FR GB GR IT LI LU NL SE**

(56) Documents cités:
**US-A- 3 813 612**

**JOURNAL OF APPLIED PHYSICS, vol. 56, no. 9, 1 novembre 1984, pages 2487-2490, American Institute of Physics, New York, US; K. MIDORIKAWA et al.: "Comprehensive study of a C02 laser using electrochemical transformation of organic compounds"**

**APPLIED PHYSICS LETTERS, vol. 7, no. 1, 1 juillet 1965, pages 21-22; J.A. HOWE: "Effect of foreign gases on the C02 laser: R-branch transitions"**

**L'ONDE ELECTRIOUE, vol. 46, no. 469, avril 1966, pages 417-422; A. TRUFFERT et al.: "Le laser à C02"**

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07(FR)**

(72) Inventeur: **Larue, Jean-Pierre CANADIAN LIOUID AIR Ltee**
**1155, Rue Sherbrooke Ouest**
**Montreal (P.O.) H3A 1H8(CA)**
Inventeur: **Marie, Bruno**
**7, Rue Marcel Rivière**
**La Verrière**
**F-78320 Le Mesnil St. Denis(FR)**
Inventeur: **Marot, Christine 23, Rue Champ Lagarde**
**11, Résidence des Pépinières**
**F-78000 Versailles(FR)**
Inventeur: **Ougarane, Lahcen**
**1, Rue Jean Cocteau**
**F-78180 Montigny le Bretonneux(FR)**
Inventeur: **Van der Have, Philippe LIOUID AIR (PTY) LIMITED**
**1St Floor**
**9 Wellington Road Parktow**
**99300-2193 Johannesburg(ZA)**

(74) Mandataire: **Le Moenner, Gabriel et al**
**L'AIR LIQUIDE**
**75, Quai d'Qrsay**
**F-75321 Paris Cédex 07 (FR)**

## Description

La présente invention est relative aux gaz lasants pour lasers $CO_2$, c'est-à-dire aux gas comprenant comme constituants au moins l'hélium, l'azote et l'anhydride carbonique ($CO_2$) et destinés à être introduits dans la cavité des lasers dits "lasers $CO_2$" en tant que milieu actif.

Il existe actuellement sur le marché deux qualités de gaz : les gaz dits "de qualité industrielle", dont la pureté garantie est généralement voisine de 99,5 %, et les gaz dits "de qualité scientifique", dont la pureté garantie est généralement 99,995 % ou plus.

Les gaz de qualité industrielle étant insuffisamment épurés pour les besoins des lasers, on utilise comme gaz lasants des gaz de qualité scientifique, qui ont l'inconvénient d'être très coûteux.

L'invention a pour but de fournir des gaz plus économiques, particulièrement adaptés aux lasers $CO_2$.

A cet effet, l'invention a pour objet, suivant un premier aspect, un gaz lasant prémélangé pour laser $CO_2$, ce gaz lasant étant du type contenant comme constituants au moins de l'hélium, de l'azote et du $CO_2$, caractérisé en ce qu'il possède une pureté globale moins bonne que 99,995 %, une teneur en eau inférieure à 5 vpm et une teneur globale en hydrocarbures inférieure à 5 vpm (vpm = parties par million en volume).

Suivant un deuxième aspect, l'invention a pour objet un procéde de préparation de gaz lasant pour lasers $CO_2$, ce gaz lasant contenant comme constituants au moins de l'hélium, de l'azote et du $CO_2$ est obtenu par mélange in situ d'au moins deux gaz, le procédé est caractérisé en ce que (a) chacun desdits gaz a une pureté globale moins bonne que 99,995 % et présente une teneur en eau inférieure à 5 vpm et une teneur globale en hydrocabures inférieure à 5 vpm, à l'exception éventuellement du $CO_2$ lorsque celui-ci constitue l'un desdits gaz, ce $CO_2$ pouvant présenter une teneur en eau inférieure à 20 vpm, et (b) le mélange ainsi obtenu possède une pureté globale moins bonne que 99,995 %, une teneur en eau inférieure à 5 vpm et une teneur globale en hydrocarbures inférieure à 5 vpm.

Des modes particuliers de réalisation de l'invention sont décrits dans les revendications dépendantes.

L'invention a également pour objet un procédé de travail au laser $CO_2$ dans lequel on introduit dans la cavité du laser un gaz lasant tel que défini ci-dessus.

Comme on le comprend aisément, on distingue dans la composition d'un gaz d'une part les constituants, qui y sont introduits volontairement, même parfois à de très faibles teneurs, et les impuretés, qui sont présentes dans le gaz de façon involontaire, parfois à des teneurs non négligeables si le gaz, ou ses constituants avant le mélange, ne sont pas épurés de façon très poussée. Ainsi, un même corps peut être un constituant pour un gaz et une impureté pour un autre, comme on le verra plus loin en ce qui concerne par exemple l'oxygène, le monoxyde de carbone, le $CO_2$ et l'azote.

Par ailleurs, il n'est question ici que des impuretés normalement recontrées dans la production industrielle des constituants des gaz lasants pour lasers $CO_2$, à savoir notamment : l'eau, l'oxygène, le monoxyde de carbone, le $CO_2$, les hydrocarbures $C_nH_m$, l'hydrogène, l'azote, l'argon et le néon, le COS et le $SO_2$.

Des exemples de gaz lasants suivant l'invention vont maintenant être décrits en regard du dessin annexé, sur lequel :

- la figure 1 est un diagramme illustrant la variation de la puissance, mesurée sur un laser $CO_2$ industriel du type à flux axial rapide, sous une pression de 80 mb et avec une intensité de 510 mA, en fonction de la teneur en eau du gaz lasant introduit dans la cavité du laser ; et
- la figure 2 est un diagramme illustrant la variation du gain mesuré sur un laser $CO_2$ expérimental, en fonction de la teneur en hydrocarbures du gaz lasant introduit dans la cavité du laser.

La Demanderesse a effectué des recherches extensives portant sur l'influence sur le fonctionnement des lasers $CO_2$, de la présence des diverses impuretés recontrées normalement dans la production industrielle des gaz entrant dans la composition des gaz lasants destinés à ces lasers. Ces recherches ont porté essentiellement sur le gain des lasers, grandeur à laquelle la puissance du laser est proportionnelle en première approximation.

Les résultats ont montré que, de façon surprenante, il n'était nécessaire de garantir une pureté élevée que par rapport à l'humidité et aux hydrocarbures, tandis que, en ce qui concerne les autres impuretés, des teneurs relativement élevées, tout à fait compatibles avec celles que l'on observe dans les gaz dits de qualité industrielle, ne nuisent pas au fonctionnement du laser.

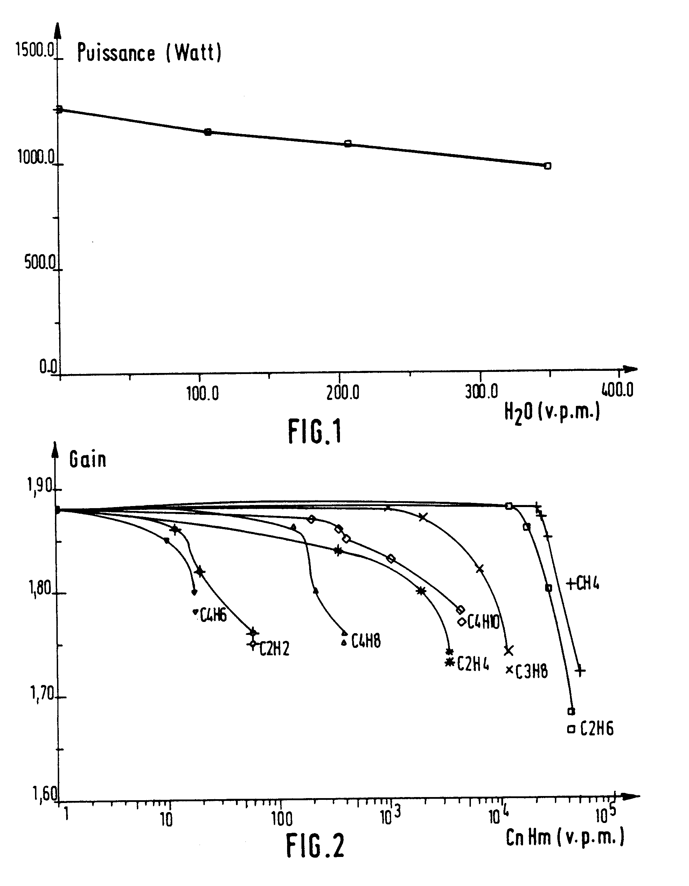

La figure 1 montre que la puissance du laser décroît linéairement lorsque la teneur en eau augmente. Toutefois, l'eau est surtout indésirable, même à de très faibles teneurs, du fait qu'elle détruit la stabilité de la décharge. Par suite, les gaz lasants doivent subir un traitement de dessication, qui ramène la teneur en eau à une valeur inférieure à 5 vpm.

La figure 2 reproduit les résultats d'essais effectués en laboratoire sur un laser expérimental.

L'analyse des résultats a conduit à la conclusion que pour ne pas obtenir de diminution de gain sensible, c'est-à-dire de l'ordre de 1 %, la teneur globale en hydrocarbures doit être inférieure à 5 vpm. Ceci tient compte du fait que certains hydrocarbures peuvent être détruits par la décharge dans la cavité du laser et former d'autres corps, en particulier d'autres hydrocarbures.

En ce qui concerne les autres impuretés présentes dans les gaz produits industriellement :
- argon, néon : aucun effet intrinsèque sur le gain n'a été constaté pour les teneurs allant jusqu'à 1 %.
- hydrogène : aucune diminution du gain n'a été constatée pour les teneurs allant jusqu'à 1 000 vpm.
- COS, $SO_2$ : aucune diminution du gain n'a été constatée pour les teneurs allant jusqu'à 100 vpm, valeur très supérieure à celles rencontrées dans les gaz de qualité industrielle.

D'autres éléments constituent des impuretés s'ils ne sont pas des constituants du gaz lasant. Il s'agit du CO et de l'oxygène. Les essais ont montré qu'ils ne produisent pas de diminution mesurable du gain pour les teneurs allant jusqu'à 1 000 vpm.

En pratique, les gaz lasants peuvent être fournis sous deux formes :

(1) en prémélange : dans ce cas, les seules impuretés à considérer sont celles dont il a été question ci-dessus. Le fonctionnement du laser est satisfaisant avec une pureté globale inférieure à celle correspondant à la qualité scientifique (99,995 %), pourvu que la teneur en eau et la teneur globale en hydrocarbures soient toutes deux inférieures à 5 vpm.

(2) en mélangeant deux ou plusieurs gaz in situ, c'est-à-dire juste avant d'introduire le mélange dans la cavité du laser, ces gaz pouvant être les constituants individuels du gaz lasant ou des prémélanges partiels de ces constituants.

Dans ce cas, on considére comme impuretés celles relatives à chaque gaz, même si elles sont des constituants du gaz lasant final. Par exemple, si on réalise un gaz lasant ternaire hélium - azote - $CO_2$ à partir de trois bouteilles contenant respectivement de l'hélium, de l'azote et du $CO_2$, l'azote et le $CO_2$ seront considérés comme des impuretés vis-à-vis de l'hélium, etc...

Les conditions à remplir pour réaliser un gaz lasant suivant l'invention sont alors que d'une part chaque gas possède une pureté globale moins bonne que 99,995 %, et que d'autre part le mélange final possède une teneur en eau inférieure à 5 vpm et une teneur globale en hydrocarbures inférieure à 5 vpm.

Toutefois, lorsque le $CO_2$ constitue l'un des gaz à mélanger, sa teneur en eau peut atteindre 20 vpm, pourvu que celle du mélange reste inférieure à 5 vpm. Ceci est rendu possible par le fait que le $CO_2$ est généralement présent dans les gaz lasants à des teneurs modérées inférieures à 10 %.

A titre d'exemple, un gaz lasant suivant l'invention ayant pour composition 74 % d'hélium, 20 % d'azote et 6 % de $CO_2$ est obtenu de deux manières :

(1) sous forme prémélangée, avec les teneurs suivantes en impuretés :

| | |
|---|---|
| $H_2O$ | 4 vpm |
| $O_2$ | 42 vpm |
| CO | 0,5 vpm |
| $C_nH_m$ | 1 vpm |
| $H_2$ | 0,5 vpm |
| Ne + Ar | 14,5 vpm |
| TOTAL | 62,5 vpm |
| La pureté globale de ce gaz lasant est par conséquent 99,99375 %. | |

(2) à partir des trois constituants fournis séparément, avec les teneurs en impuretés indiquées dans le tableau de la page suivante :

| GAZ impuretés (vpm) | $N_2$ | $CO_2$ | He |
|---|---|---|---|
| $H_2O$ | 4 | 15 | 2 |
| $O_2$ | 3 | 10 | 5 |
| CO | 1 | 2 | 0,2 |
| $CO_2$ | 1 | – | 0,2 |
| $C_nH_m$ | 0,5 | 4 | < 0,1 |
| $H_2$ | < 0,1 | 1 | < 0,1 |
| $N_2$ | – | 45 | 60 |
| Ar + Ne | 65 | – | 14 |
| TOTAL | 74 | 77 | 81 |
| Pureté Globale (%) | 99,9926 | 99,9923 | 99,9919 |

Le mélange a ainsi une teneur en eau de 3,2 vpm et une teneur globale en hydrocarbures de 0,44 vpm.

Les deux gaz lasants ainsi obtenus ont donné des résultats satisfaisants.

Les gaz lasants suivant l'invention peuvent contenir, outre l'hélium, l'azote et le $CO_2$, du monoxyde de carbone et/ou de l'oxygène à titre de constituants.

## Revendications

1. Gaz lasant prémélangé pour lasers $CO_2$, ce gaz lasant étant du type contenant comme constituants au moins de l'hélium, de l'azote et de l'anhydride carbonique ($CO_2$), caractérisé en ce qu'il possède une pureté globale moins bonne que 99,995 %, une teneur en eau inférieure à 5 vpm et une teneur globale en hydrocarbures inférieure à 5 vpm.

2. Gaz lasant suivant la revendication 1, caractérisé en ce que la pureté globale est comprise entre 99,5 % et 99,995 % exclusivement.

**3.** Procédé de préparation de gaz lasant pour lasers $CO_2$, ce gaz lasant contenant comme constituants au moins de l'hélium, de l'azote et de l'anhydride carbonique ($CO_2$) est obtenu par mélange in situ d'au moins deux gaz, le procédé est caractérisé en ce que (a) chacun desdits gaz a une pureté globale moins bonne que 99,995 % et présente une teneur en eau inférieure à 5 vpm et une teneur globale en hydrocarbures inférieure à 5 vpm, à l'exception éventuellement du $CO_2$ lorsque celui-ci constitue l'un desdits gaz, ce $CO_2$ pouvant présenter une teneur en eau inférieure à 20 vpm, et (b) le mélange ainsi obtenue possède une pureté globale moins bonne que 99,995 %, une teneur en eau inférieure à 5 vpm et une teneur globale en hydrocarbures inférieure à 5 vpm.

**4.** Procédé suivant la revendication 3, caractérisé en ce que chacun desdits gaz ont une pureté globale comprise entre 99,5 % et 99,995 % exclusivement.

**5.** Gaz lasant suivant l'une des revendications 1 ou 2, caractérisé en ce que les constituants du gaz comprennent, outre l'hélium, l'azote et le $CO_2$, du monoxyde de carbone (CO) et/ou de l'oxygène.

**6.** Procédé suivant l'une quelconque des revendications 3 ou 4, caractérisé en ce que les constituants du gaz comprennent, outre l'hélium, l'azote et le $CO_2$, du monoxyde de carbone (CO) et/ou de l'oxygène.

**7.** Procédé de travail au laser $CO_2$, caractérisé en ce qu'on introduit dans la cavité du laser un gaz lasant conforme à l'une quelconque des revendications 1, 2 et 5 ou obtenu par le procédé selon l'une quelconque des revendications 3, 4 et 6.

**Claims**

**1.** A premixed laser gas for $CO_2$ lasers, the laser gas being of the type containing as components at least helium, nitrogen and carbon dioxide ($CO_2$), characterised in that it has an overall purity which is less than 99.995%, a content of water of less than 5 vpm and an overall content of hydrocarbons of less than 5 vpm.

**2.** A laser gas according to claim 1, characterised in that the overall purity is comprised exclusively between 99.5% and 99.995%.

**3.** A method for preparing a laser gas for $CO_2$ lasers, the laser gas containing as components at least helium, nitrogen and carbon dioxide ($CO_2$), and being obtained by mixing in situ at least two gases, the method is characterised in that (a) each of the said gases has an overall purity of less than 99.995% and has a content of water of less than 5 vpm and an overall content of hydrocarbons of less than 5 vpm, with the exception possibly of $CO_2$ when this is one of the said gases, $CO_2$ being able to have a content of water of less than 20 vpm and (b) the mixture obtained thus having an overall purity of less than 99.995%, a content of water of less than 5 vpm, and an overall content of hydrocarbons of less than 5 vpm.

**4.** A method according to claim 3, characterised in that each of the said gases has an overall purity of between 99.5% and 99.995% exclusively.

**5.** A laser gas according to one of claims 1 to 2, characterised in that, in addition to helium, nitrogen and $CO_2$, the components of the gas include carbon monoxide (CO) and/or oxygen.

**6.** A method according to one of claims 3 or 4, characterised in that, in addition to helium, nitrogen and $CO_2$, the components of gas include carbon monoxide (CO) and/or oxygen.

**7.** A method of working with a $CO_2$ laser, characterised in that a laser gas according to one of claims 1, 2 and 5 or obtained by the method according to one of claims 3,4 and 6, is introduced into the cavity of the laser.

**Patentansprüche**

**1.** Vorgemischtes Lasergas für $CO_2$-Laser, wobei das Lasergas der Gattung angehört, die als Bestandteile zumindest Helium, Stickstoff und Kohlendioxyd ($CO_2$) enthält, dadurch gekennzeichnet, daß es einen

6

EP 0 362 041 B1

Gesamtreinheitsgrad von weniger als 99,995 %, einen Wassergehalt von weniger als 5 vpm und einen Gesamtgehalt an Kohlenwasserstoffen von weniger 5 vpm hat.

2. Lasergas nach Anspruch 1, dadurch gekennzeichnet, daß der Gesamtreinheitsgrad zwischen 99,5 % und 99,995 % ausschließlich liegt.

3. Verfahren zur Herstellung von Lasergas für $CO_2$-Laser, wobei dieses Lasergas als Bestandteile wenigstens Helium, Stickstoff und Kohlendioxyd ($CO_2$) hat und durch in-situ-Mischung von wenigstens zwei Gasen erhalten wird, welches Verfahren dadurch gekennzeichnet ist, daß (a) jedes dieser Gase einen Gesamtreinheitsgrad von weniger als 99,995 %, einen Wassergehalt von weniger als 5 vpm und einen Gesamtgehalt an Kohlenwasserstoffen von weniger als 5 vpm hat, gegebenenfalls mit Ausnahme von $CO_2$, sofern dieses eines der Gase bildet, welches $CO_2$ einen Wassergehalt von weniger als 20 vpm haben kann, und daß (b) das so erhaltene Gemisch einen Gesamtreinheitsgrad von weniger als 99,995 %, einen Wassergehalt von weniger als 5 vpm und einen Gesamtgehalt an Kohlenwasserstoffen von weniger als 5 vpm hat.

4. Verfahren nach Anspruch 3, dadurch gekennzeichnet, daß jedes dieser Gase einen Gesamtreinheitsgrad zwischen 99,5 % und 99,995 % ausschließlich hat.

5. Lasergas nach Anspruch 1 oder Anspruch 2, dadurch gekennzeichnet, daß die Bestandteile des Gases außer Helium, Stickstoff und $CO_2$, Kohlenmonoxyd (CO) und/oder Sauerstoff enthalten.

6. Verfahren nach einem der Ansprüche 3 oder 4, dadurch gekennzeichnet, daß die Bestandteile des Gases außer Helium, Stickstoff und $CO_2$, Kohlenmonoxyd (CO) und/oder Sauerstoff enthalten.

7. Arbeitsverfahren für $CO_2$-Laser, dadurch gekennzeichnet, daß in den Laserhohlraum ein Lasergas nach einem der Ansprüche 1, 2 und 5 oder erhalten nach dem Verfahren nach einem der Ansprüche 3, 4 und 6, eingeleitet wird.

7

FIG.1

FIG.2